# EUROPEAN PATENT APPLICATION

(11) **EP 1 055 444 A1**
(43) Date of publication of application: **29.11.2000**
(21) Application number: 00201744.0
(22) Date of filing: 17.05.2000
(51) Int. Cl.: B01D 33/11, B01D 33/50

(54) **Rotating drum filter**

(30) Priority: 26.05.1999 NL 1012153
(71) Applicant: Van Remmen UV techniek, 7400 AL Deventer (NL)
(72) Inventor: Jansen, Petrus Fransiscus, 5151 LX Drunen (NL); Wageman, Fransiscus Gerhardus Johannes, 7559 KZ Hengelo (NL)

(57) **Abstract**

Water filter of the rotating type, in which the water is entered into a drum screen and in which the water leaves via the drum screen. Filtered-out material, which collects on the inside of the drum screen, is continuously washed-off with the aid of nozzles, placed above the drum screen and is collected by a through-shaped element, located underneath the nozzles, inside the drum screen.

## Description

The invention relates to a water filter, comprising a housing, in which a drum screen is rotatably mounted, an inlet for the water to be filtered, an outlet for the filtered water, an outlet for the pollution that has been filtered out and drive means for rotating the drum screen.

A water filter of this type is known from the patent specification EP 0 817 667. It should be noticed however that the known water filter is arranged for the collection and compactification of solid material in water, while the present invention forms a first step in a water treatment process, aiming at the delivery of relatively clean water. More in particular the inventive water filter is very suitable for removing fish faeces from fish ponds, for the recycling of rinsing water and as a first step in preparing surface water to be used for example in a sprayer system or as drinking water for cattle.

A disadvantage of the known water filter is that the drum screen has bearing bushes, the diameter of which is equal to the diameter of the drum screen. The advantage of this expensive construction is that it becomes very simple to supply water to be filtered to the drum screen and to remove the material that has been filtered out from the inside of the drum screen. For the inventive water filter another, cheaper solution has been selected, which is characterised in that the drum screen is mounted for rotation around two centrally located bearings, that one bearing is part of the drive means and that the other bearing comprises a tube-shaped element, for letting in the water to be filtered and letting out the filtered-out pollutants.

A favourable embodiment of the inventive water filter, in which sealing problems of the drum screen are eliminated, is characterized in that a front side and a backside of the drum screen are closed with a cover.

A very favourable embodiment according to an aspect of the invention is characterized in that one cover is provided with a coupling part for connecting to the drive means and that the other cover is provided with a bearing bush, arranged for rotating around the tube shaped-element. By using on one side the bearing of the drive means, the costs of the water filter are further reduced.

A very favourable embodiment, enabling the separate flow of two different liquids in the tube-shaped element, is according to another aspect of the invention characterised in that the tube-shaped element is provided with a longitudinally placed dividing wall, on a first side of which water to be filtered is present and on a second side of which filtered-out pollutants are present.

According to another very favourable embodiment the first side the tube-shaped element is provided with holes, for letting pass water to be filtered and the tube-shaped element is provided with a through-shaped erection, a lower side of which is connected to the second side of the tube-shaped element. The through-shaped element is placed in the drum screen in such a manner that filtered-out material that is collected on the inside of the drum screen will fall off into the through-shaped and will be discharged. A favourable embodiment in which this falling-off is stimulated is characterized in that a tube is provided, mounted outside the drum screen and above the through-shaped element, provided with at least one nozzle, for operationally spraying water onto an outside of the drum screen. The water, which is partly collected by the through-shaped element together with the filtered-out material, moreover helps discharging the filtered-out material. In this manner, a continuous filtering process is realised, without a backflow cycle being necessary for periodically cleaning the drum screen.

A favourable embodiment according to a further aspect of the invention, which may significantly reduce the lifecycle costs of the filtering apparatus, is characterised in that the drum screen comprises an at least substantially cylindrical part, provided with detachably mounted frames, in which frames filtering cloth or filter gauze is mounted. If a filter is damaged, it is normally sufficient to replace only one frame. A favourable embodiment with which the costs may be further reduced, is characterised in that the frames are made divisible, for enabling the removal of old and reception of new filtering cloth or filter gauze. An additional advantage is that the width of mesh of the filter can be selected in this manner simple and cost-effective in dependence of the type of pollution.

A further favourable embodiment, which greatly simplifies the replacement of a filter on the spot, is characterized in that the housing is provided with a removable cover, for providing access for changing the frames.

The invention will now be further explained with reference to the following figures, in which:
- Fig. 1: represents in a first perspective view the inventive water filter;
- Fig. 2: represents in a second perspective view the inventive water filter;
- Fig. 3: represents in a perspective view the drum screen and its bearing;
- Fig. 4: represents in a perspective view the drum screen and the tube-shaped element;
- Fig. 5: represents in a perspective view part of the water filter and the through-shaped element together with nozzles.

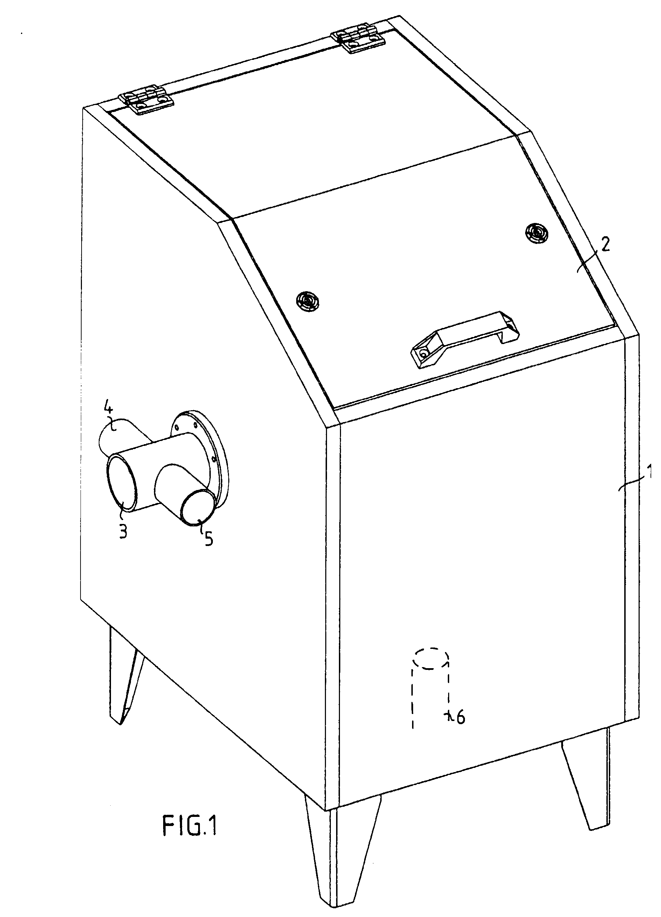

Fig. 1 represents in a first perspective view the inventive water filter, on which a housing 1 is visible, made of stainless steel, and a cover 2 which can simply be opened, after which for example the filters can be replaced or any other maintenance may be performed. Further a tube-shaped element 3 is visible, connecting to an inlet 4 for the water to be filtered, and an outlet 5 for outputting the filtered-out material together with some water added to it. Moreover, an outlet 6 is shown, for outputting the filtered water which may be used directly or which may be supplied to an additional apparatus for further processing.

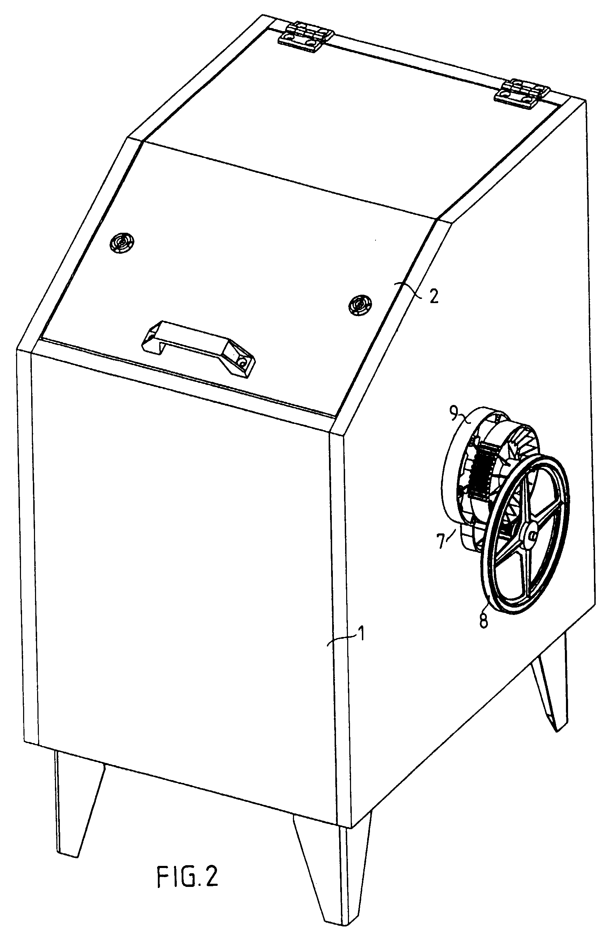

Fig. 2 represents in a second perspective view the inventive water filter, such that drive means 7 are visible, in the sense that only a wheel 8 for a V-shaped belt is shown, which can be coupled to a motor or another power source in a manner well known in the art. In this embodiment drive means 7 is an existing assembly for a washing machine, because in a washing machine in fact the same problem is solved. Drive means 7 consists of a toothing and a flange 9, which provides for the sealing and which comprises the actual bearing. Within housing 1 protrudes an operationally rotating flange, which is provided with a cavity, arranged for accommodating a small block which is in turn connected to a washing drum or, in the present case, a drum screen, Thereby the small block supports the drum and drives the drum for rotation.

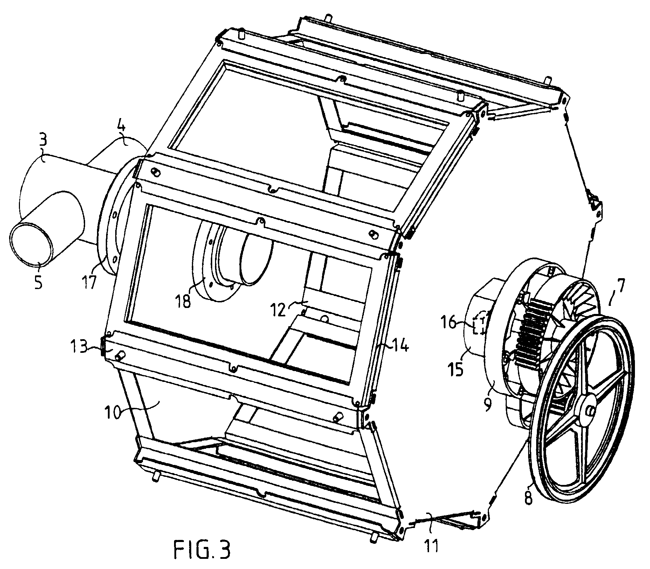

Fig. 3 represents in a perspective view the drum screen and its bearing. The drum screen consists of two covers 10, 11, made of stainless steel, which are mutually connected by profiles 12. On the outside, profiles 12 are provided with clamping profiles 13, which keep a number of frames 14 in place. Frames 14 are made divisible, with two substantially identical subframes, between which a filter cloth or a filter gauze can be placed, after which both subframes can be secured by screws. The subframe which actually contacts the drum screen is moreover provided with an annular seal on its circumference, in order to prevent unfiltered water from leaking-out.

Further flange 9 is visible from drive means 7, which operationally is mounted onto the outside of housing 1, and rotating flange 15, which catches a small block 16 and which is mounted onto cover 11. Finally tube-shaped element 3 is visible with inlet 4 for the water to be filtered, outlet 5 for the filtered-out material, a non-rotating flange 17, for mounting onto housing 1 and a flange 18 which is mounted onto cover 10 and which rotates together with it. Between flange 17 and flange 18, a tube-shaped bearing is situated, as such well known in the art.

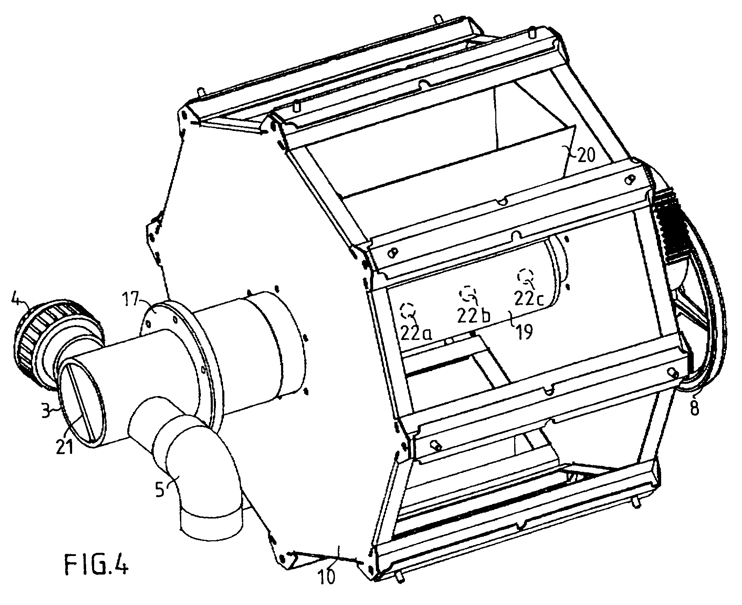

Fig. 4 represents in a perspective view the drum screen and the tube-shaped element 3, in a situation in which a tube 19 and a through-shaped element 20 mounted onto it is slided onto tube-shaped element 3. Tube 19 is via tube-shaped element 3 connected to housing 1 and is therefore non-rotating. Between tube 19 and through-shaped element 20 a wide opening is made, such that filtered-out material which falls from the frames into through-shaped element 20 can leave the water filter via tube 19, tube-shaped element 3 and outlet 5. In tube-shaped element 3 and tube 19, a dividing wall 21 is placed, such that the filtered-out material cannot reach inlet 4. Water entering inlet 4 will flow into the drum screen via holes 22a, 22b, 22c in tube 10. In Fig. 4 a cover, normally mounted onto the front side of tube-shaped element 3 has been removed, in order to make dividing wall 21 visible.

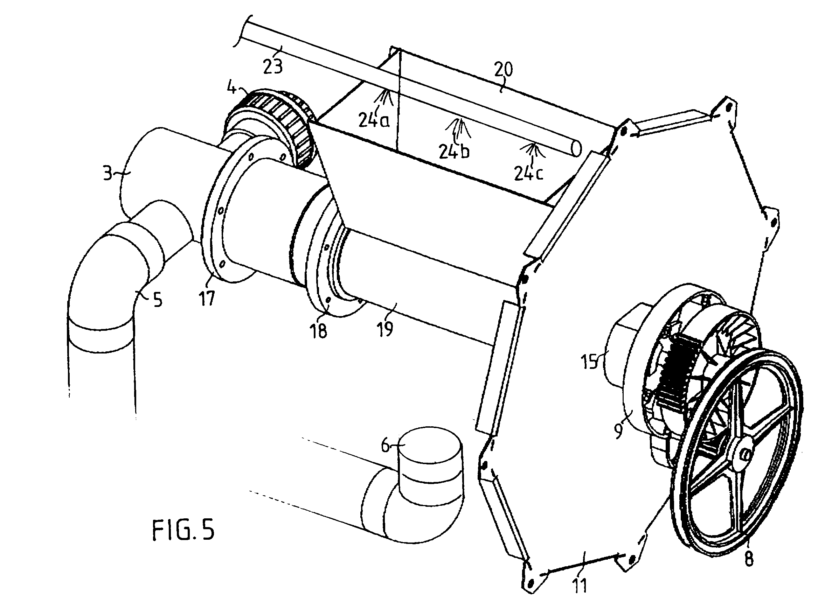

Fig. 5 represents in a perspective view part of the water filter and the through-shaped element 20 together with a tube 23, mounted above through-shaped element 20 and provided with nozzles 24a, 24b, 24c. Tube 23 is located within housing 1 but outside the drum screen, in such a way that the water distributed by the nozzles will wash-off the filtered-out material that collects on the inside of the filters in the frames, causing the filtered-out material to land in through-shaped element 20.

The water supplied to tube 23 may be part of the filtered water that leaves outlet 6. For that purpose, a small pump, not shown here, may be added.

## Claims

1. Water filter, comprising a housing, in which a drum screen is rotatably mounted, an inlet for the water to be filtered, an outlet for the filtered water, an outlet for the pollution that has been filtered out and drive means for rotating the drum screen, characterised in that the drum screen is mounted for rotation around two centrally located bearings, that one bearing is part of the drive means and that the other bearing comprises a tube-shaped element, for letting in the water to be filtered and letting out the filtered-out pollutants.

2. Water filter according to claim 2, characterised in that a front side and a backside of the drum screen are closed with a cover.

3. Water filter according to claim 2, characterised in that one cover is provided with a coupling part for connecting to the drive means and that the other cover is provided with a bearing bush, arranged for rotating around the tube shaped-element.

4. Water filter according to claim 1, characterised in that the tube-shaped element is provided with a longitudinally placed dividing wall, on a first side of which water to be filtered is present and on a second side of which filtered-out pollutants are present.

5. Water filter according to claim 4, characterised in that on the first side the tube-shaped element is provided with holes, for letting pass water to be filtered.

6. Water filter according to claim 4, characterised in that the tube-shaped element is provided with a through-shaped erection, a lower side of which is connected to the second side of the tube-shaped element.

7. Water filter according to claim 1, characterised in that a tube is provided, mounted outside the drum screen and above the through-shaped element, provided with at least one nozzle, for operationally spraying water onto an outside of the drum screen.

8. Water filter according to claim 1, characterised in that the drum screen comprises an at least substantially cylindrical part, provided with detachably mounted frames, in which frames filtering cloth or filter gauze is mounted.

9. Water filter according to claim 8, characterised in that the frames are made divisible, for enabling the removal of old and reception of new filtering cloth or filter gauze.

10. Water filter according to claim 9, characterised in that the housing is provided with a removable cover, for providing access for changing the frames.
